# EUROPEAN PATENT APPLICATION

(11) **EP 4 596 425 A1**
(43) Date of publication of application: **06.08.2025**
(21) Application number: 24221940.0
(22) Date of filing: 19.12.2024
(51) Int. Cl.: B64F 5/60, G05B 23/02, G06F 30/20, G06F 30/27, G06N 20/00, G06Q 10/20, G06Q 50/40, G08G 5/26

(54) **GENERATING DYNAMIC UTILIZATION MEASURES FOR AIRCRAFT BASED ON ENVIRONMENTAL CONDITIONS**

(30) Priority: 31.01.2024 US 202418429074
(71) Applicant: The Boeing Company, Arlington, VA 22202 (US)
(72) Inventor: KASHYAP, Uddip, Arlington, 22202 (US); PRAKASH, Amit, Arlington, 22202 (US); BABU M S, Girish, Arlington, 22202 (US); KUMAR, S.R. Ashok, Arlington, 22202 (US); JAHAGIRDAR, Vaidehi Ravitej, Arlington, 22202 (US)
(74) Representative: Bryn-Jacobsen, Caelia

(57) **Abstract**

The present disclosure provides techniques for dynamic utilization of aircraft based on environmental conditions. A proposed flight plan for an aircraft is received. Environment data representing a set of environmental conditions at a source airport indicated in the proposed flight plan is collected. Weather data representing a set of environmental conditions at a destination airport indicated in the proposed flight plan is collected. Operation data related to the aircraft indicated in the proposed flight plan is received. Aircraft engine degradation of the aircraft is dynamically simulated based on the collected environment data and the received operation data using a trained machine learning (ML) model. The simulated aircraft engine degradation is output.

## Description

### FIELD

Aspects of the present disclosure relate to evaluating dynamic utilization of aircraft, and, more specifically, to the dynamic simulation and prediction of aircraft component degradation based on air quality conditions and corresponding aircraft operational data.

### BACKGROUND

Predicting aircraft degradation serves an important role in reducing the risk of engine failure and avoiding costly unplanned maintenance. Degradation prediction can help in predicting the lifespan of Life Limited Part (LLPs), modules, and entire engines. By identifying early signs of potential problems, such prediction allows for proactive interventions before serious issues develop. However, the degradation of aircraft engines may be affected by a highly complex combination of various factors, including engine use, environmental factors, material aging, and manufacturing variances, among others. This complexity often leads to substantial challenges in accurately predicting degradation.

As a result, conventional methods generally rely on over-estimating degradation (predicting more degradation than actually occurs), providing a buffer to prevent unexpected failures or maintenance needs. While this approach ensures safety and reliability, it can lead to unnecessary costs. As such, there is a substantial need to develop methods that can predict engine degradation both accurately and efficiently.

### SUMMARY

The present disclosure provides a method in one aspect, the method including, receiving a proposed flight plan for an aircraft, collecting environment data representing a set of environmental conditions at a source airport indicated in the proposed flight plan, collecting environment data representing a set of environmental conditions at a destination airport indicated in the proposed flight plan, receiving operation data related to the aircraft indicated in the proposed flight plan, dynamically simulating aircraft engine degradation of the aircraft based on the collected environment data and the received operation data using a trained machine learning (ML) model, and outputting the simulated aircraft engine degradation.

Other aspects in this disclosure provide non-transitory computer-readable mediums containing computer program code that, when executed by operation of one or more computer processors, performs operations in accordance with one or more of the above methods, as well as systems comprising one or more computer processors and one or more memories containing one or more programs which, when executed by the one or more computer processors, performs an operation in accordance with one or more of the above methods.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 depicts an example environment in which examples of the present disclosure may be implemented.
Figure 2 depicts an example workflow for using machine learning models to predict aircraft engine degradation and drive dynamic cost estimation and maintenance scheduling, according to some aspects of the present disclosure.
Figure 3 depicts an example method of estimating aircraft costs based on predicted aircraft engine degradation, according to some aspects of the present disclosure.
Figure 4 depicts an example method of evaluating aircraft maintenance needs based on the predicted aircraft engine degradation, according to some aspects of the present disclosure.
Figure 5 is a flow diagram depicting an example method for simulating aircraft engine degradation, according to some aspects of the present disclosure.
Figure 6 depicts an example computing system for aircraft engine degradation simulation, according to some aspects of the present disclosure.

### DETAILED DESCRIPTION

The present disclosure provides advanced mechanisms for dynamically simulating the performance of aircraft components and predicting component degradation based on air quality data and corresponding aircraft operational data. Additionally, the present disclosure provides mechanisms for forecasting aircraft utilization within a specific range of time based on scheduled flight plans, historical aircraft operational data, and historical air quality data of relevant airports. The disclosed method optimizes maintenance schedules and provides accurate aircraft estimates for the costs associated with aircraft operation. In one aspect, the air quality data may include the air quality index (AQI)) at the source and destination airports. Aspects of the present disclosure provide techniques to predict degradation of a wide variety of aircraft components, such as engines, auxiliary power units (APUs), and the like. In some aspects, the aircraft operation data may include parameters such as engine exhaust gas temperature, aircraft load data, thrust rating, GPS coordinates, and other relevant operational metrics. In some aspects, the collected data may be processed and fed into machine learning models that are trained to simulate the aircraft engine performance and predict degradation. As used here, "thrust rating" may refer to the amount of thrust (e.g., the amount of force) that the engine is rated or configured to produce, where the rating may be increased or decreased as needed based on expected aircraft load. A higher trust rating generally allows for more payload and faster speeds, but it may also result in increased degradation, leading to increased maintenance needs.

The disclosed system provides a data-driven approach to generate more precise predictions of aircraft component degradation, which can significantly enhance the efficiency of aircraft operations and maintenance. For example, in some aspects, such as when an aircraft operates in particular geographic regions, the aircraft may be more frequently exposed to complex environmental conditions such as sandstorms, high temperatures, and airborne dust (particularly during takeoff and landing phases). These factors may accelerate the degradation of specific aircraft components such as the engines. The disclosed system may simulate the degradation of aircraft components (e.g., aircraft engines) over a designated number of flight cycles (e.g., 100 flight cycles) based on the environmental data, the aircraft operational data, the scheduled flight plans, and/or other pertinent factors. For example, if an aircraft's primary routes involve flights to and from areas with compromised air quality, the system may provide simulations that predict the potential impacts on the aircraft's engine, (e.g., predicting that after completing 100 flight cycles in these challenging environments, the engine could exhibit degradation comparable to 130 flight cycles experienced in regions with cleaner air).

In some aspects, the disclosed system may perform long-term predictive analysis. Using historical operational data, past environmental conditions, and records of maintenance alerts, the disclosed system may predict the potential degradation of aircraft components (e.g., aircraft engines) over an extended period of time (e.g., the next two years). For example, if past environmental data indicates that the region where the aircraft operates has poor air quality 70% of the time during the past year, the system may use this data to project potential wear and tear of the engines for the upcoming year.

The simulations and predictions regarding aircraft degradation may improve the efficiency of aircraft operations and maintenance. Instead of adhering to a generic maintenance schedule, the system, guided by the predicted degradation, may evaluate the aircraft's maintenance needs dynamically and generate timely alerts to notify the operators to proactively plan or adjust the maintenance schedules. Additionally, in some aspects, the disclosed system may estimate aircraft operational costs based on the predicted aircraft degradation. The cost estimations may be flexibly adjusted, considering factors such as the environmental conditions of the regions that the flight covers, the updated operational data representing the aircraft's health, impending maintenance needs, and more. This estimated costs may assist aircraft owners, aircraft operators, and other relevant parties in making informed decisions regarding budget planning and maintenance scheduling.

In some examples, the generated alerts may be transmitted to maintenance personnel and/or personnel administrating maintenance across a fleet of aircraft, providing them with detailed prognostics on the health and maintenance needs of each specific aircraft. In some aspects, upon receiving these alerts, the personnel may take a variety of actions to ensure that the aircraft is repaired and/or maintained appropriately. In some examples, personnel that administrate maintenance scheduling and/or fleet management may make strategic decisions upon receiving these alerts. For example, the personnel may adjust the aircraft's schedule, allocate the aircraft to less demanding routes (e.g., routes that induce less environmental wear and tear), and/or arrange or schedule maintenance earlier than previously scheduled. In some aspects, the personnel may modify the scheduled routes for multiple aircraft (e.g., to account for the changes made to the specific aircraft's schedule) and/or the entire fleet. As another example, the personnel may order necessary or useful components for the upcoming maintenance. Such a component preorder may ensure that all relevant components are available when needed, therefore minimizing downtime. As yet another example, based on the received alerts, the personnel may directly notify maintenance technicians to conduct specific repairs on an aircraft.

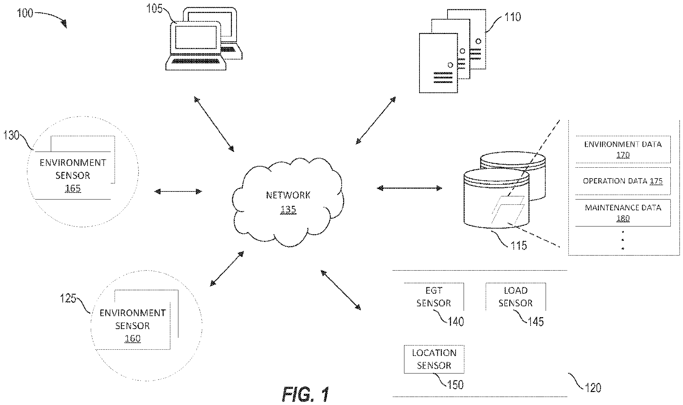

Figure 1 depicts an example environment 100 in which examples of the present disclosure may be implemented. In the illustrated example, the environment 100 includes one or more client devices 105, one or more servers 110, one or more storage devices 115 (e.g., cloud databases), one or more aircrafts 120, one or more environment sensors at one or more airports. In some aspects, to predict aircraft component degradation for a given flight cycle, the system may collect environment data from one or more environment sensor 160 at the corresponding source airport 125, and one or more environment sensors 165 at the corresponding destination airport 130.

In the illustrated example, the servers 110 are coupled directly or indirectly to the client devices 105, the databases 115, the aircrafts 120, and the environment sensors 160 and 165 through a network 135. The network 135 may include or correspond to a wide area network (WAN), a local area network (LAN), the Internet, an intranet, or any combination of suitable communication mediums that may be available, and may include wired, wireless, or a combination of wired and wireless links. The network 135 may provide connectivity for the various systems, components, or resources within the environment 100, and may be implemented using protocols such as Transmission Control Protocol (TCP) and/or Internet Protocol (IP). In some aspects, the servers 110, the client devices 105, and the databases 115 may be local to each other (e.g., within the same local network and/or the same hardware system), and communicate with one another using any appropriate local communication medium, such as a local area network (LAN) (including a wireless local area network (WLAN)), hardwire, wireless link, or intranet, etc. In some aspects, the environment 100 may represent a cloud computing environment, and the servers 110, the client devices 105, and the databases 115 may operate through a centralized cloud computing platform.

In the illustrated example, the environment sensors 160 and 165 are configured to collect and/or receive local, real-time environment data at the source and destination airports 125 and 130 of a given flight path or cycle. In some aspects, for a given flight cycle/path, the system may identify the corresponding source and destination airports, and collect relevant environment data from sensors installed at these airports. In some aspects, these environment sensors may be installed at locations within or near each airport (or other locations where aircraft may take off and/or land), enabling them to capture relevant environment data that can directly affect aircraft operations. In some aspects, the other locations where aircraft takeoffs and lands may include seaplane bases, aircraft carriers, helipads, and snow or ice runways, among others. The environment sensor may measure a variety of environmental parameters at each airport (or other locations where aircraft may take off and/or land), such as temperature, humidity, wind speed, air pressure, and the air quality index (AQI). In some aspects, the sensors may be specifically configured to measure the AQI within an approximate radius, such as within approximately four kilometers from each airport (or other locations where aircraft may take off and/or land). In some aspects, for a given flight cycle/path, the system may evaluate the environmental conditions throughout the entire flight route (e.g., not limited to the conditions at the locations of aircraft takeoff and landing) to predict the degradation of aircraft components.

In some aspects, the data collected by these environment sensors 160 and 165 may be transmitted directly to the server 110 (e.g., via the network 135) for subsequent analysis and processing (e.g., simulating the engine degradation in given conditions, predicting the engine's long-term degradation based on historical trends). In some aspects, the real-time environment data may be stored within the database 115, serving as a record of environment data 170, and saved for further reference and analysis.

As illustrated here, the aircraft 120 further includes an exhaust gas temperature (EGT) sensor 140, a location sensor 150, and a load source 145.

In the illustrated example, the EGT sensor 140 is configured to measure the temperature of the exhaust gases from an aircraft engine, which provides valuable information about the combustion efficiency and overall health of the engine. For example, the excessively high exhaust gas temperature may suggest that the engine is running on a lean fuel mixture (e.g., more air than the ideal air-fuel ratio), which can lead to excess heat and cause engine components to degrade more quickly. Conversely, the excessively low exhaust gas temperature may indicate a rich fuel mixture (e.g., more fuel than the ideal air-fuel ratio), which can lead to inefficient fuel consumption and suboptimal engine performance.

In the illustrated example, the load sensor 145 is implemented using a sensor system that is configured to sense the load or weight of the aircraft. In some aspects, the load sensor 145 may provide real-time data on the aircraft's weight distribution. In some aspects, the sensor may also include a user interface system that allows aircraft operators or other relevant parties to manually input load-related information. For example, before a flight, the aircraft operator may enter data about the number of passengers, the weight of cargo, the amount of fuel onboard, and any other data that may impact the aircraft's load. In some aspects, the input load data, combined with the sensor measurement, may then be transmitted to the server 110 via the network 135. The server, upon receiving the load data, may process the data using specific computational algorithms to determine the thrust rating of the aircraft.

In the illustrated example, the location sensor 150 is configured to track the aircraft's position in real time. In one aspect, the location data source 150 may be implemented using a global positioning system (GPS). In some examples, this location data may be precise (e.g., using GPS) or relatively imprecise (e.g., identifying the general area of the source and destination of a given flight cycle).

In one aspect, the data collected by the EGT sensor 140, load sensor 145, location sensor 150, and/or other sensors installed on the aircraft 120 may be transmitted directly to the server 110 (e.g., via the network 135) for subsequent analysis and processing. In some aspects, this information may be stored within the database 115, serving as a record of operation data 175 that may be accessed and used for further reference and analysis.

In the illustrated example, the database 115 may store a wide range of information regarding to aircraft operations and maintenance, including but not limited to environment data 170, operation data 175, and maintenance data 180. The environment data 170 provides details about environmental conditions at various airports (or other locations where aircraft takeoff and/or land) when an aircraft takeoffs and lands. The operation data 175 captures various metrics reflecting the aircraft engine's performance in each flight, such as engine exhaust gas temperature, fuel consumption, speed, GPS position, load, thrust rating, and the like. The maintenance data 180 offers records or logs for previous maintenance and repairs conducted on the aircraft. In some aspects, the maintenance data may include the engine's past performance, any issues or problems that have been addressed, and/or the general wear and tear of the engine that have been reported. In some aspects, the maintenance data may be automatically uploaded by the aircraft's onboard systems. In some aspects, the maintenance data may be manually entered into the system by maintenance personnel or other operators.

In some aspects, the servers 110 may be any form of computing device that provides various services to the connected devices (e.g., client devices 105, aircraft 120, environment sensors 160 and 165, and database 115). In some aspects, the server 110 may receive requests or commands from the client devices. The requests, which may be initiated by an aircraft operator, instruct the server to either simulate the potential degradation of an aircraft engine over a certain number of flight cycles in given conditions or predict the engine's long-term degradation based on historical trends. In some aspects, the request may instruct the server to predict the maintenance needs of the engine based on the simulation and/or prediction results, prompting the server to send maintenance alerts as necessary. In some aspects, the request may direct the server to calculate the aircraft's operational costs using the simulation results, and generate corresponding invoices for any chosen number of flight cycles. In some aspects, the request may instruct the server to estimate future cost trends based on the prediction results, and generate a visual representation (e.g., a line chart) of these forecasts.

In some aspects, the server 110 may receive or access the relevant data collected by the environment sensors 160 and 165 (e.g., AQI of the source and destination airports for the indicated flight path(s)), as well as the data collected or computed by devices on the aircraft 120 (e.g., thrust rating, GPS position, aircraft load, and exhaust gas temperature). In some aspects, in addition to or rather than collecting information for the specific aircraft that will fly the flight paths, the server 110 may access information for similar aircraft (e.g., other aircraft of the same type or model that have flown the same or a similar route). Upon receiving the data, in some aspects, the server 110 may preprocess it to generate a cohesive and normalized dataset, and feed the dataset into machine learning models. In some aspects, the dataset may include, but is not limited to, aircraft thrust rating, engine exhaust gas temperature, and AQI of the source and destination airports.

In some aspects, by utilizing the current environment data (e.g., collected by environment sensors 160 and 165 at the source and destination airports) and aircraft operation data (e.g., collected by sensors on the aircraft), the server 110 may simulate the potential degradation of the aircraft engine over a defined number of flight cycles in the given conditions. The simulation may provide valuable insights into the performance of the engine in the immediate future. In some aspects, the historical environment data may be used to predict the long-term degradation of the aircraft engine. In some aspects, the historical environment data may include the air quality data (e.g., AQI), which measures the daily or hourly air quality within or near the source and destination airports (or other locations where aircraft may take off and/or land), with higher values indicating greater levels of air pollutants and particulates. The historical air quality data may be extracted for a specific time frame, such as the last year, or averaged over the past fewer years to provide a more comprehensive view of the air quality conditions at these airports. In some aspects, besides air quality, the historical environment data may include various other parameters that reflect the environmental conditions when the aircraft takeoffs and/or lands and may affect the engine's performance and degradation over time. For example, the other parameters may include the temperature, humidity, wind speed, and/or air pressure within or near the source and destination airports. The historical environment data (e.g., historical AQI of the source and destination airports), along with the corresponding aircraft operation and maintenance data, may be applied into the machine learning models to predict the long-term degradation trends of the engine over an extended period of time (e.g., the next couple of months or years).

In some aspects, the server 110 may predict the maintenance needs of the aircraft based on the results from the simulations and/or predictions, and generate alerts when necessary. In some aspects, the server 110 may estimate aircraft operational costs based on the simulation results, and generate invoices for each flight cycle or any chosen number of flight cycles. In some aspects, the server 110 may predict future cost trends based on the prediction results, and generate a visual representation (e.g., a line chart) of these forecasts. In some aspects, the server 110 may save all the collected data and the generated results to the database 115. The stored data may be used by the server 110 to continuously train or refine the ML models, thereby improving prediction accuracy over time.

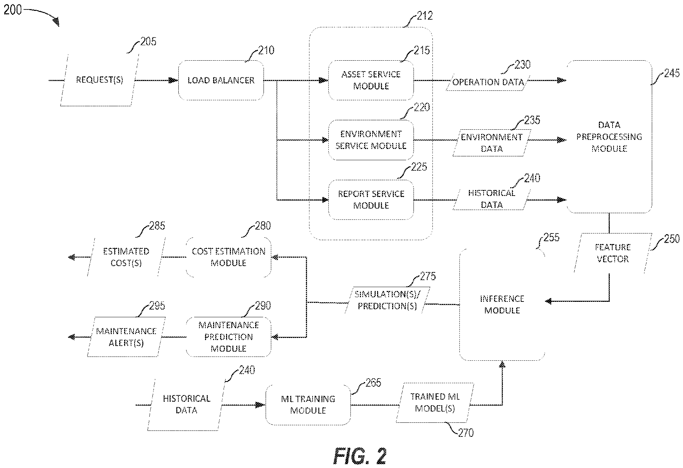

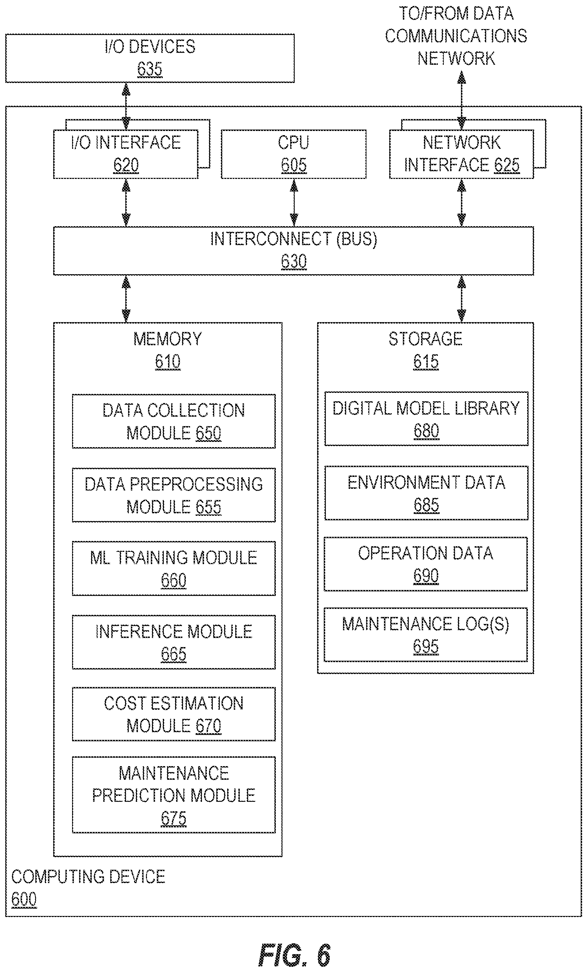

Figure 2 depicts an example workflow 200 for using machine models to predict aircraft engine degradation and drive dynamic cost estimation and maintenance scheduling, according to some aspects of the present disclosure. In some aspects, the workflow 200 may be performed by one or more computing systems, such as the server 110 as depicted in Figure 1, or the computing device 600 as depicted in Figure 6. Though depicted as discrete components for conceptual clarity, in some aspects, the operations of the depicted components (and others not depicted) may be combined or distributed across any number and variety of components, and may be implemented using hardware, software, or a combination of hardware and software.

In the illustrated example, one or more requests 205 are provided to the load balancer 210. In some aspects, the requests may be initiated by an aircraft owner, operator, or other authorized users, and sent via a client device (e.g., 105 of Figure 1). The requests 205 may instruct the system to perform various operations, such as simulating and/or predicting aircraft engine degradation, predicting maintenance needs, estimating operational costs, or any combination of these tasks.

In the illustrated example, the load balancer 210, upon receiving the requests 205, distributes the requests 205 across different modules (e.g., the asset service module 215, the environment service module 220, and the report service module 225) within one or more servers (e.g., 110 of Figure 1) in the network. In some aspects, the load balancer 210 may act as a reverse proxy, helping to determine how to distribute the incoming requests 205 across multiple servers (e.g., 110 of Figure 1). The distribution of the requests by the load balancer 210 ensures optimal utilization of system resources (e.g., maximizing throughput, and minimizing response time), and avoids overloading any single server. As illustrated, the asset service module 215, the environment service module 220, and the report service module 225 are depicted as being within a single server 212. In some aspects, these modules may be distributed across multiple servers (e.g., 110 of Figure 1), thereby enhancing the overall performance of the system.

In the illustrated example, the assert service module 215 is triggered when it receives the requests 205 from the client device (e.g., 105 of Figure 1) via the load balancer 210, and starts to collect the necessary operation data 230 from sensors installed on the aircraft (e.g., 120 of Figure 1). In some aspects, the sensors may include, but are not limited to, an EGT sensor (e.g., 140 of Figure 1), a GPS or location sensor (e.g., 150 of Figure 1), and an aircraft load sensor (e.g., 145 of Figure 1), among others. As discussed above, the EGT sensor may be configured to measure the temperature of the exhaust gases from the aircraft engine(s). The location sensor may be implemented to track the aircraft's location. The load sensor may be configured to measure the weight or load of the aircraft, which then be used in calculating the thrust rating of the aircraft (or which may be used to determine or set the thrust rating). As illustrated, the assert service module 215 communicates with these onboard sensors, collects necessary operation data 230, and forwards the data 230 to the data preprocessing module 245 for further processing.

In the illustrated example, the environment service module 220, upon receiving the request 205 via the load balancer 210, initiates the collection of environment data 235. In some aspects, the environment data may be collected from sensors (e.g., 160 and 165 of Figure 1) installed within or near the source and destination airports (e.g., 125 and 130 of Figure 1) of the specified flight path(s). In some aspects, the environment data may include a variety of environmental parameters that reflect the environmental conditions near the airports (or other locations where aircraft may take off and/or land), such as temperature, humidity, wind speed, air pressure, and air quality index (AQI). In some aspects, the AQI of an airport may be determined by conducting air quality measurements within an approximate radius (e.g., within four kilometers) from the central point of the airport. As illustrated, the environment service module 220 continuously forwards the collected environment data 235 to the data preprocessing module for subsequent analysis.

In the illustrated example, following the requests 205, the report service module 225 retrieves relevant historical data 240 (e.g., from a database), and reports this information to the data preprocessing module 245. In some aspects, the historical data 240 may include a broad range of information, including, but is not limited to, historical operation data from previous flights of the same or similar aircraft (e.g., aircraft location, aircraft loading, thrust rating, EGT temperature), past environmental conditions at the source and destination airports over time (e.g., AQI), and maintenance records or logs for previous maintenance and repairs conducted on the aircraft. In some aspects, the historical data may be saved in the system's database (e.g., 115 of Figure 1). In some aspects, the historical data may provide valuable context for simulating the current performance of the aircraft engine, and/or predicting future trends in engine degradation.

In the illustrated example, the operation data 230, the environment data 235, and the historical data 240 are provided to the data preprocessing module 245, which processes and prepares the data for subsequent machine learning inference. In some aspects, the data preprocessing module 245 may first clean the data, which may involve filling in missing values, checking data validity, correcting inconsistent values or errors, and identifying outliers or unusual data points. After the cleaning is complete, in some aspects, the data preprocessing module 245 may normalize the data, and transform it into a format that can be easily and effectively used by the inference module 255. In some aspects, the normalization may include rescaling the numeric values so that the data measured on different scales are adjusted to a common scale. In some aspects, when the data normalization is finished, the data preprocessing module 245 may further perform feature selection, during which the data preprocessing module 245 may identify and select the most relevant features (or attributes) to use in the model inference process. Upon completing the feature selection, the data preprocessing module 245 may generate a feature vector 250, which represents the selected features in a format that can be used as input to the trained ML models within the inference module 255. In some aspects, the feature vector for simulating and/or predicting aircraft engine degradation may include features such as the average and/or peak exhaust gas temperature, average, peak, and/or current (or proposed) thrust rating for the flight path, and the average and/or peak AQI at the source and destination airports (e.g., overall, or at specified time(s) and/or date(s) when the future flights are proposed to occur).

In the illustrated example, the feature vector 250 is transmitted to the inference module 255, which takes the provided feature vector 250 as input and runs the trained ML models 270 to make actionable simulations/predictions 275. In some aspects, the inference module 255 may apply the feature vector (e.g., which include current environment data and operation data) to trained ML models, for the simulation of potential degradation of the aircraft engine over a series of flight cycles under the given environmental conditions. In some aspects, the inference module 255 may use the feature vector (e.g., which include historical environment data, along with other relevant historical operation data and maintenance data) to predict the long-term degradation trends of the engine over an extended period of time (e.g., the next couple of months or years).

As illustrated, the ML models 270 used by the inference module 255 are trained and refined by the ML training module 265. The ML training module 265 uses the historical data 240 as inputs, and the corresponding measured aircraft engine degradation as target outputs, to teach the models. The historical data 240 may be saved in a database (e.g., 115 of Figure 1), and may include historical operation data from previous flights (e.g., collected by the sensors on the aircraft), past environmental conditions at the airports (e.g., collected by the environment sensors at the source and destination airports), and/or maintenance data. The model is trained to map the inputs to the target outputs, and learn the patterns and correlations within the data that lead to specific levels of engine degradation.

In some aspects, the historical data may be divided into three datasets, a training dataset, a validation dataset, and a testing dataset. The training dataset may be used to train ML models, enabling the models to build correlations between the input feature vector (which may include various operation, environment and maintenance data) and the measured engine degradation, and eventually equipping the models with the ability to accurately simulate and/or predict engine degradation in real time, based on the inputs they receive. After the training phase, the validation dataset may be applied to tune the hyperparameters of the models to achieve optimal performance (e.g., selecting the model with a specific combination of hyperparameter values that provides the best performance on the validating dataset), and avoid overfitting issues (e.g., which occur when a model excessively adapts to the training data, to the extent that it performs poorly on unseen data). Finally, after the models have been trained and validated, the testing dataset may be used to evaluate the performance of the trained models. The performance of the models may be determined by measuring the differences between the model outputs (e.g., predicted engine degradation) and target outputs (e.g., actual measured degradation) on the testing datasets. A number of suitable machine learning algorithms or architectures may be used, depending on the particular implementation. In some aspects, a decision tree architecture may be used. In some aspects, a random forest architecture may be used, or any other suitable machine learning algorithm can be used. In some aspects, a neural network architecture, especially deep learning models, may be used to capture the complex patterns between input vectors and target outputs.

As illustrated, based on the results from the simulations and/or predictions 275, the maintenance prediction module 290 predicts the maintenance needs of the aircraft engine. In some aspects, this process may involve determining a time frame (or a schedule) for when the predicted engine degradation reaches a level that makes maintenance necessary. In some aspects, a countdown clock may be set up for the time frame (or the schedule). If the maintenance prediction module 290 determines that the remaining time falls below a defined threshold (e.g., less than a defined number of days, or less than a defined number of flight hours or flight cycles), it may trigger an alert to notify the relevant personnel (e.g., the aircraft operator). The alert may serve as an early warning, notifying the aircraft operator to schedule and implement the necessary maintenance operations, thereby avoiding unexpected breakdowns and optimizing the use of system resources.

In the illustrated example, the cost estimation module 280 processes the simulation/prediction results 275 and estimates the operational cost 285 associated with the proposed aircraft flight plans (e.g., the proposed flight paths and times). For example, in some aspects, the cost estimation module 280 may generate estimated costs 285 for each flight cycle or any chosen number of flight cycles. In some aspects, besides the engine degradation, other factors may be considered in determining the aircraft operational cost, such as the fuel consumption, the aircraft loading, the maintenance and replacement parts cost, the downtime due to maintenance, and the remaining lifespan of the aircraft engine. In some aspects, the cost estimation module 280 may generate invoices for the estimated costs (e.g., for each flight cycle or any chosen number of flight cycles), detailing the estimated costs associated with the aircraft's operations based on the simulation/prediction results 275.

In some aspects, the cost estimation module 280 may use the prediction results (e.g., the predicted long-term trends of engine degradation) to forecast further cost changes. For example, if the prediction indicates an increasing trend in engine degradation, the subsequent maintenance cost may rise, and the lifespan of the aircraft engine may be reduced, thereby leading to an increase in the operational cost. In some aspects, the cost estimation module 280 may generate visual representations (e.g., line charts) of these forecasted cost trends. The estimated costs 285, and the forecasted cost trends provided by the cost estimation module 280 may assist aircraft owners, operators, maintenance personnel, and other relevant parties in making informed decisions and managing resources more effectively. The visibility of cost trends over time may facilitate strategic budget planning, such as negotiating contracts or leasing rates, or allocating budgets for maintenance.

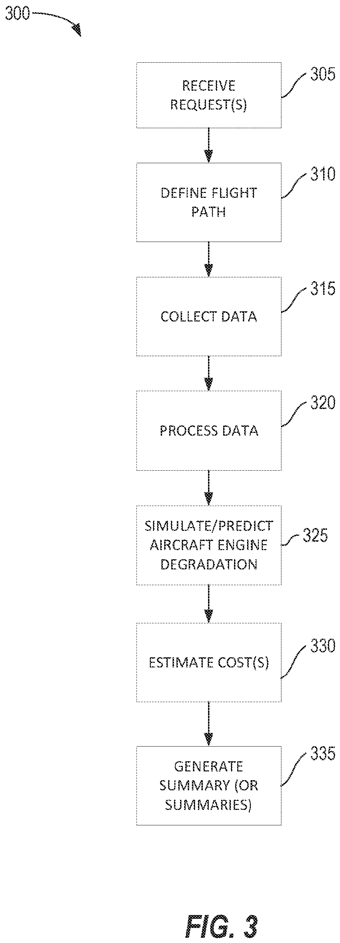

Figure 3 depicts an example method 300 of estimating aircraft costs based on predicted aircraft engine degradation, according to some aspects of the present disclosure. In some aspects, the method 300 may be performed by one or more computing systems, such as the server 110 as depicted in Figure 1, or the computing device 600 as depicted in Figure 6.

The method 300 begins at block 305, where a computing system receives requests or commands (e.g., 205 of Figure 2) that instruct the computer system to simulate and/or predict aircraft engine degradation. In some aspects, the requests or commands may be initiated by an aircraft operator, maintenance personnel, or other authorized users, and may be sent via a client device (e.g., 105 of Figure 1).

At block 310, the computing system defines or determines the flight path based on the requirements outlined in the received requests (e.g., 205 of Figure 2). In some aspects, the requests may include information like the source airport, the destination airport, the number of flight cycles, the flight hours, and the aircraft model, which may be used to define the flight path.

At block 315, the computing system coordinates with various sensors or data sources to collect the necessary data to support the simulation and prediction tasks. For example, the computing system may communicate (e.g., via the asset service module 215 of Figure 2) with the sensors (e.g., EGT sensor 140, load sensor 145, location sensor 150 of Figure 1) installed on an aircraft (e.g., 120 of Figure 1) to collect data that reflects the operational health of the aircraft engine. In some aspects, the operation data collected and/or computed by these sensors may include, but is not limited to, the engine exhaust gas temperature, the aircraft location, the aircraft loading, and the aircraft thrust rating. In some aspects, the computing system may collect environment data (e.g., via the environment service module 220 of Figure 2) from sensors (e.g., 160 and 165 of Figure 1) installed at both the source and destination airports (e.g., 125 and 130 of Figure 1) to account for environmental impacts on engine performance. In some aspects, the computing system may access a database (e.g., 115 of Figure 1) (e.g., via the report service module 225 of Figure 2) to retrieve the historical data associated with the aircraft's operations (e.g., historical aircraft operation data, past environmental conditions at the source and destination airports, and/or maintenance records). The historical aircraft operation data may include parameters such as past flight hours, fuel consumption, engine degradation, exhaust gas temperature, aircraft model, location, loading, and other operational metrics from previous flights. The past environment data may include past temperature, humidity, wind speed, air pressure, and AQI readings from the source and destination airports. The maintenance records may provide information on the overall health of the engine, such as past repairs, component replacements, routine check-ups, and other maintenance-related information. The historical data allows the system to continuously trace the past performance of the engine and its working environments, helping the system predict future performance and degradation more accurately and efficiently.

The method 300 continues to block 320, where the computing system preprocesses the data for subsequent simulations and/or predictions. In some aspects, the preprocessing process may involve cleaning the data to remove any errors or outliers, normalizing the data to ensure all features are on a consistent scale, and/or performing feature selection to determine the relevant inputs for the trained ML models. In some aspects, after the data is cleaned, normalized, and selected, the computing system may transform the data into a format that the ML models can utilize efficiently. In some aspects, the data may be transformed into a structured feature vector that contains the selected features (or attributes) and their corresponding values. In some aspects, the feature vector for simulating and/or predicting aircraft engine degradation may include features such as the engine exhaust gas temperature, thrust rating, and AQI at the source and destination airports.

At block 325, the computing system, with the required data collected and processed, utilizes trained ML models to conduct simulations and/or predictions. In some aspects, the simulation process may involve the use of ML models to simulate the aircraft engine's degradation over a specific number of flight cycles under the given conditions (e.g., the current environment and operation data collected by sensors). The computing system may apply the feature vector to the models as inputs to predict how the aircraft engine may perform and degrade over a defined number of flight cycles in the near future. The simulation provides a data-driven approach to understanding the engine's current condition and possible degradation, which can then be used for proactive maintenance planning and cost estimation, as depicted in more detail below.

In some aspects, the computing system may also engage in predictive analysis, which involves using ML models to predict the long-term aircraft utilization and/or degradation trends of the aircraft engine. In some aspects, the ML models use the historical operation data, past environmental conditions, and maintenance records as inputs, to predict the likely degradation of the engine over an extended period (e.g., the next couple of months or years). Based on the predicted degradation trends, the computing system may forecast long-term operational cost changes and/or utilization of the aircraft, and therefore perform more strategic budget planning and maintenance scheduling, as depicted in more detail below.

At block 330, the computing system estimates the operational cost of the aircraft based on the simulation and/or prediction results. For example, in one aspect, the computing system may generate estimated costs for each flight or any chosen number of flight cycles based on the simulation results (e.g., simulating the aircraft engine degradation over a certain number of flight cycles under given conditions). In some aspects, based on the prediction results (e.g., predicting the likely degradation of the engine over an extended period of time), the computing system may determine the corresponding operational cost changes during that period of time (e.g., the next couple of months or years). In some aspects, besides the engine degradation, other factors may be considered in the cost estimation, including but not limited to, the fuel consumption, the aircraft loading, the maintenance cost, the downtime due to maintenance, the remaining lifespan of the aircraft engine, and the like.

At block 335, the computing system generates a predicted cost summary for each flight cycle, or for any chosen number of flight cycles, based on the estimated costs. The generated summary provides a clear and detailed breakdown of the estimated costs associated with the aircraft's operations. In some aspects, the flexibility in summary generation may aid in maintaining transparency between the aircraft operator and other involved parties, providing them with the necessary information to make informed decision in budget planning. For example, based on the precise and data-driven cost estimations, aircraft owners and operators may negotiate leasing rates for a specific aircraft flying between the selected source and destination airports.

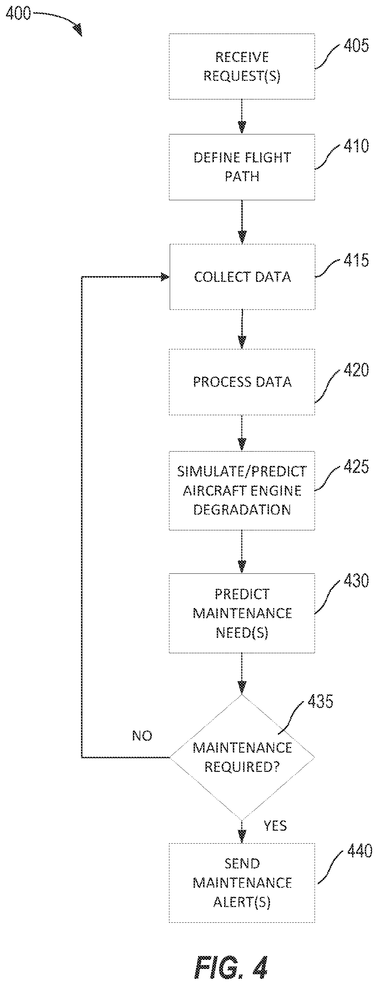

Figure 4 depicts an example method 400 of evaluating aircraft maintenance needs based on the predicted aircraft engine degradation, according to some aspects of the present disclosure. In some aspects, the method 400 may be performed by one or more computing systems, such as the server 110 as depicted in Figure 1, or the computing device 600 as depicted in Figure 6.

The method 400 begins at block 405, where a computing system receives requests or commands (e.g., 205 of Figure 2), which instruct the computing system to perform various operations, such as simulating the potential degradation of an aircraft engine under given conditions, predicting the engine's long-term degradation based on historical trends, and/or forecasting the engine's maintenance needs based on the predicted degradation.

At block 410, the computing system defines the flight path of an aircraft based on the received requests or commands. In some aspects, the requests may include various parameters that serve to define the flight path, such as the aircraft model, the source airport, the destination airport, the number of flight cycles, and the flight hours.

At block 415, the computing system collects the necessary data for simulation and/or prediction from various sensors and/or data sources. For example, the computing system may access sensors (e.g., via the asset service module 215 of Figure 2) that are installed on the aircraft, to collect operation data, such as engine exhaust gas temperature, aircraft location, aircraft loading, and other key performance parameters. Additionally, in some aspects, the computing system may access environment sensors (e.g., via the environment service module 220 of Figure 2) to collect data that reflect the environmental conditions at the airports. In some aspects, the environment sensors may be installed within or near the source and destination airports. In some aspects, besides collecting operation and environment data, the computing system may further access the system's database (e.g., 115 of Figure 1) to retrieve historical data associated with the aircraft's operations. The historical data may include aircraft operation data from previous flights, past environmental conditions at the source and destination airports, and/or maintenance records. The historical data provides valuable insights on the past performance of the engine and its working environments, and may be applied to ML models to predict the engine's future performance and degradation.

At block 420, the computing system preprocesses the collected data to make it ready for subsequent simulations and/or predictions. In some aspects, the preprocessing process may include data cleaning, data normalization, and/or feature selection. The data cleaning may involve removing, correcting, or replacing any incorrect or irrelevant data points (e.g., errors or outliers) within the collected data. The data normalization may involve transforming numeric values into a common scale. The data normalization is performed to ensure that the ML models treat all features equally during training and inference. The feature selection may involve identifying and selecting the relevant features (or attributes) from the data for the trained ML models. The selected features (or attributes) may include those that contribute significantly to the model's accuracy. For example, in some aspects, the selected feature for simulating and/or predicting aircraft engine degradation may include the engine exhaust gas temperature, the thrust rating, the AQI at the source and destination airports. In some aspects, after the data is cleaned, normalized, and selected, the computing system may transform the data into a structured feature vector, which can be used efficiently by ML models.

At block 425, the computing system simulates and/or predicts engine degradation based on the processed data using trained ML models. In some aspects, the computing system may apply the feature vector, which includes operation and environment data, and other relevant parameters, to the ML models. The outputs of the model may include the simulations of the engine's performance and the predicted engine degradation over a specific number of flight cycles under the given conditions. In some aspects, the computing system may perform predictive analysis based on historical operation data, past environmental conditions, and maintenance records. At runtime, the computing system may input the historical data into trained ML models, to predict the long-term aircraft utilization and/or degradation trends of the aircraft engine.

At block 430, the computing system may determine the maintenance needs of the engine based on the predicted engine degradation. In some aspects, the computing system may generate a time frame (or schedule) for when the predicted engine degradation reaches a level that necessitates maintenance. In some aspects, a countdown (e.g., a clock or count of flight cycles) may be set up for the time frame (or schedule). In some aspects, the computing system may create a score indicating the urgency for maintenance based on the predicted degradation. The higher the score, the more urgent or immediate attention is required. In some aspects, the computing system may generate a risk level (e.g., low, medium, or high) of failure based on the predicted degradation to alert the maintenance needs. In some aspects, the risk level may include a probability of failure within a given period of time (e.g., 5% chance of engine failure within the next 100 flight cycles).

At block 435, the computing system determines whether maintenance is required based on the predicted engine degradation. In some aspects, when a time frame (or schedule) is created to indicate the maintenance needs (e.g., maintenance will be needed in 50 flight hours or after fifteen flight cycles), the computing system may compare the remaining time and/or cycles to a defined criteria (e.g., a defined threshold). If it is determined that the remaining time or cycles (e.g., maintenance is due in 50 flight hours) falls below the threshold (e.g., 100 flight hours), the method 400 proceeds to block 440, where the computing system generates an alert, informing the aircraft operator or other relevant parties that maintenance is needed. If the remaining time is above the threshold, the method 400 returns to block 415, where the computing system continues to track the aircraft's operations and collects relevant data. In some aspects, when a maintenance urgent score is created to indicate the maintenance needs (e.g., a score of 5), the computing system may compare the score with a defined threshold (e.g., a score of 7), and generate an alert when the score surpasses the threshold.

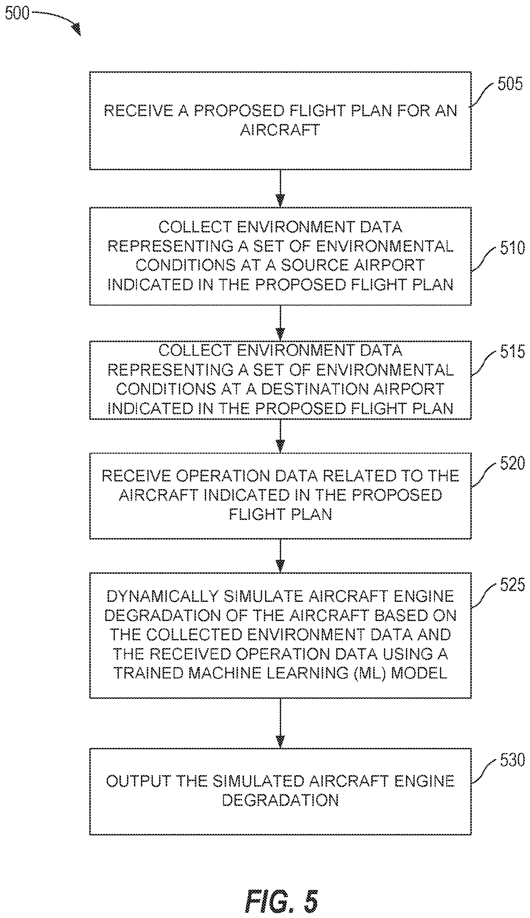

Figure 5 is a flow diagram depicting an example method for simulating aircraft engine degradation, according to some aspects of the present disclosure.

The method 500 begins at block 505, where a system (e.g., the server 110 of Figure 1) receives a proposed flight plan for an aircraft. In some aspects, the flight plan provides detailed information about a planned flight, including the aircraft model, source airport, destination airport, the number of flight cycles, expected flight hours, and/or the designed flight routes.

At block 510, the system collects environment data representing a plurality of environmental conditions at a source airport (e.g., 125 of Figure 1) indicated in the proposed flight plan. In some aspects, the environment data may be provided by the environment sensor (e.g., 160 of Figure 1) installed within or near the source airport (e.g., 125 of Figure 1). In some aspects, the environment data comprises the air quality index (AQI) of the source airport.

At block 515, the system collects environment data representing a plurality of environmental conditions at a destination airport (e.g., 130 of Figure 1) indicated in the proposed flight plan. In some aspects, the environment data may be provided by the environment sensor (e.g., 165 of Figure 1) installed within or near the destination airport (e.g., 130 of Figure 1). In some aspects, the environment data comprises the air quality index (AQI) of the destination airport.

At block 520, the system receives operation data related to the aircraft indicated in the proposed flight plan. In some aspects, the operation data may comprise at least one of engine exhaust gas temperature, and thrust rating. In some aspects, the operation data may be provided by the sensors (e.g., EGT sensor 140, aircraft load sensor 145, aircraft location sensor 150 of Figure 1) installed on the aircraft (e.g., 120 of Figure 1).

At block 525, the system dynamically simulates aircraft engine degradation of the aircraft based on the collected environment data (e.g., 230 of Figure 2) and the received operation data (e.g., 235 of Figure 2) using a trained machine learning (ML) model (e.g., 270 of Figure 2).

At block 530, the system outputs the simulated aircraft engine degradation. In some aspects, the system may further predict the maintenance needs of the aircraft based on the simulated aircraft engine degradation. In some aspects, the prediction of maintenance needs may include estimating a time frame for the simulated aircraft engine degradation reaching a level that necessitates maintenance. In some aspects, the system may send an alert (e.g., 295 of Figure 2) when the time frame falls below a defined threshold. In some aspects, the system may further estimate an operational cost (e.g., 285 of Figure 2) of the aircraft flying between the source airport and the destination airports, based at least in part on historical environment data (e.g., 240 of Figure 2) or the simulated aircraft engine degradation. In some aspects, the ML model (e.g., 270 of Figure 2) is trained using historical training data (e.g., 240 of Figure 2), which comprises receiving input training data, where the input training data comprises historical environment data and corresponding operation data, correlating the input training data with output training data, where the output training data comprises known aircraft engine degradations, and training the ML model based on the correlation.

Figure 6 depicts an example computing device 600 for aircraft engine degradation simulation, according to some aspects of the present disclosure. Although depicted as a physical device, in examples, the computing device 600 may be implemented using a virtual device(s), and/or across a number of devices (e.g., in a cloud environment). The computing device 600 may be any type of computing device, such as the server 110 or the client device 105 as illustrated in Figure 1.

As illustrated, the computing device 600 includes a CPU 605, memory 610, storage 615, one or more network interfaces 625, and one or more I/O interfaces 620. In the illustrated example, the CPU 605 retrieves and executes programming instructions stored in memory 610, as well as stores and retrieves application data residing in storage 615. The CPU 605 is generally representative of a single CPU and/or GPU, multiple CPUs and/or GPUs, a single CPU and/or GPU having multiple processing cores, and the like. The memory 610 is generally included to be representative of a random access memory. Storage 615 may be any combination of disk drives, flash-based storage devices, and the like, and may include fixed and/or removable storage devices, such as fixed disk drives, removable memory cards, caches, optical storage, network attached storage (NAS), or storage area networks (SAN).

In some aspects, I/O devices 635 (such as keyboards, monitors, etc.) are connected via the I/O interface(s) 620. Further, via the network interface 625, the computing device 600 can be communicatively coupled with one or more other devices and components (e.g., via a network, which may include the Internet, local network(s), and the like). As illustrated, the CPU 605, memory 610, storage 615, network interface(s) 625, and I/O interface(s) 620 are communicatively coupled by one or more buses 630.

In the illustrated example, the memory 610 includes a data collection module 650, a data preprocessing module 655, a ML training module 660, an inference module 665, a cost estimation module 670, and a maintenance prediction module 675. Although depicted as a discrete component for conceptual clarity, in some aspects, the operations of the depicted component (and others not illustrated) may be combined or distributed across any number of components. Further, although depicted as software residing in memory 610, in some aspects, the operations of the depicted components (and others not illustrated) may be implemented using hardware, software, or a combination of hardware and software.

In one aspect, the data collection module 650 may communicate with various sensors and/or data sources to collect the necessary data for simulating and/or predicting the engine's performance and degradation. In some aspects, the data collected may include real-time data representing the operation of the aircraft engine (e.g., 230 of Figure 2), real-time data reflecting the environmental conditions at the source and destination airports (e.g., 235 of Figure 2), and/or historical data (e.g., 240 of Figure 2) associated with the aircraft's previous operations, past environmental conditions, and maintenance records. In some aspects, the data collection module 650 may further comprise an assert service module (e.g., 215 of Figure 2) (which is configured to collect real-time operation data), an environment service module (e.g., 220 of Figure 2) (which is configured to collect real-time environment data), and a report service module (e.g., 225 of Figure 2) (which is configured to retrieve historical data).

In one aspect, the data preprocessing module 655 may preprocess raw data collected from various sensors and/or data sources, and transform the raw data into a format for further processing and analysis (e.g., ML model training, ML model inference for simulating and/or predicting engine degradation). As stated above, the preprocessing process may include cleaning missing or incomplete data, resolving inconsistencies, normalizing data to a common scale, and selecting relevant features (or attributes) for predictive analysis.

In one aspect, the ML training module 660 may train, validate, and/or test the ML models (e.g., 270 of Figure 2) that the system uses for simulation and prediction. The module 660 may perform these functions by utilizing historical data collected and stored in the system's database (e.g., 115 of Figure 1). In some aspects, the historical data may be divided into three datasets, a training dataset, a validation dataset, and a testing dataset. During the training phase, the ML training module 660 may use the training dataset to teach the ML models the underlying patterns in the data. For example, the ML models may learn how the different input features (e.g., exhaust gas temperature, thrust rating, AQI of the source airport, AQI of the destination airport) correlate with the target output (e.g., the measured engine degradation). After the initial models are trained, in some aspects, the ML training module 660 may use the validation dataset to fine-tune the models. The validation process may further improve the models' performance without risking overfitting to the training dataset. In some aspects, once the models are validated, the testing dataset may be applied to evaluate the performance of the final models. In some aspects, the ML training module 660 may continuously refine the models based on new incoming data. For example, when new data are collected from aircraft sensors, environment sensors, and/or maintenance logs, these data may be processed and used to further train and update the ML models, enabling the models to dynamically adapt to new trends or changes in the data, and enhancing the overall accuracy and reliability of the system.

In one aspect, the inference module 665 may apply the preprocessed dataset (e.g., a feature vector), generated by the data preprocessing module 655, to the trained ML models (e.g., 270 of Figure 2), in order to generate simulation and/or prediction results. In some aspects, the inference module 665 may utilize the trained models to simulate the performance of the aircraft engine over a defined number of flight cycles under the given conditions (e.g., the real-time operation and environment data measured by sensors), and/or predict the potential degradation of the engine (e.g., engine degradation for 100 flight cycles between a source airport and a destination airport). In some aspects, by analyzing patterns in the historical and current data, the inference module may apply the models to predict how the engine's performance and conditions may change over time, and thereby forecast the long-term degradation trends of the aircraft engine.

In one aspect, the cost estimation module 670 may estimate the operational cost of the aircraft. The operational cost of the aircraft may be determined based at least in part on the predicted engine degradation, along with other factors, such as fuel consumption, aircraft load, maintenance cost, downtime due to maintenance, and the remaining lifespan of the aircraft engine. In some aspects, the cost estimation module 670 may estimate the cost for each flight, or for any chosen number of flight cycles, based on the simulation results (which indicate the predicted engine degradation over a certain number of flight cycles in the measured environment and operation conditions). In some aspects, the cost estimation module 370 may determine the operational cost changes over an extended period (e.g., the next couple of months or years), based on the prediction results (which indicate the likely degradation trends of the engine over that period). In some aspects, the cost estimation module 670 may generate an invoice for each flight cycle, or for any defined number of flight cycles based on the estimated costs.

In one aspect, the maintenance prediction module 675 may predict the maintenance needs of the aircraft engine based on the anticipated engine degradation. In some aspects, the predicted maintenance needs may be represented in the form of a schedule or a time frame, which estimates when the degradation of the aircraft engine is likely to reach a level that necessitates maintenance. The maintenance prediction module 675 may compare the remaining time (e.g., within the schedule or time frame) to a defined threshold, to determine whether an alert should be generated. In some aspects, a clock may be set up for the schedule or time frame, counting down to the moment when the engine condition will likely reach the maintenance-necessary threshold. In some aspects, the predicted maintenance needs may be represented in the form of a score (e.g., scores of 1-10) indicating the urgency for maintenance. The maintenance prediction module 675 may compare the score to a defined threshold, and generate an alert when the score (e.g., a score of 7) surpasses the threshold (e.g., a score of 5). In some aspects, the maintenance prediction module 675 may generate a risk level (e.g., low, medium, or high) of failure to alert the maintenance needs. In some aspects, the risk level may include a probability of failure within a given period of time (e.g., a 20% chance of engine failure within the next 100 flight cycles). The maintenance prediction module 675 may similarly compare the probability of failure to a defined threshold, and generate an alert when the probability of failure surpasses the threshold.

In the illustrated example, the storage 615 may include a digital model library 680, environment data 685, operation data 690, and/or maintenance logs 695. In some aspects, as depicted in Figure 1, the aforementioned information may be saved in a remote database 115 that connects to the computing device 600 (e.g., server(s) 110, or client device(s) 105) via a network 135.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Further examples are set out in the clauses below:
1. A method, comprising:
   receiving a proposed flight plan for an aircraft;
   collecting environment data representing a set of environmental conditions at a source airport indicated in the proposed flight plan;
   collecting environment data representing a set of environmental conditions at a destination airport indicated in the proposed flight plan;
   receiving operation data related to the aircraft indicated in the proposed flight plan;
   dynamically simulating aircraft engine degradation of the aircraft based on the collected environment data and the received operation data using a trained machine learning (ML) model; and
   outputting the simulated aircraft engine degradation.
2. The method of clause 1, wherein the environment data comprises air quality index (AQI).
3. The method of clause 1 or 2, wherein the operation data comprises at least one of engine exhaust gas temperature, and thrust rating.
4. The method of any one of the preceding clauses, further comprising predicting maintenance needs of the aircraft based on the simulated aircraft engine degradation.
5. The method of clause 4, wherein the predicting maintenance needs comprises estimating a predicted time when the simulated aircraft engine degradation will necessitate maintenance, and the method further comprising sending an alert when the predicted time satisfies one or more defined criteria.
6. The method of any one of the preceding clauses, further comprising estimating an operational cost of the aircraft flying between the source airport and the destination airport, based at least in part on historical environment data or the simulated aircraft engine degradation.
7. The method of any one of the preceding clauses, wherein the ML model is trained using historical training data, comprising:
   receiving input training data, wherein the input training data comprises historical environment data and corresponding operation data;
   correlating the input training data with output training data, wherein the output training data comprises known aircraft engine degradations; and
   training the ML model based on the correlation.
8. The method of any one of the preceding clauses, wherein dynamically simulating aircraft engine degradation of the aircraft further comprises generating dynamic utilization prediction for the aircraft within a range of time based on the proposed flight plan, historical operation data of the aircraft, and historical environment data of the source and destination airports using the trained ML model.
9. A system, comprising:
   one or more computer processors; and
   a memory containing a program which when executed by the one or more computer processors performs an operation, the operation comprising:
      receiving a proposed flight plan for an aircraft;
      collecting environment data representing a set of environmental conditions at a source airport indicated in the proposed flight plan;
      collecting environment data representing a set of environmental conditions at a destination airport indicated in the proposed flight plan;
      receiving operation data related to the aircraft indicated in the proposed flight plan;
      dynamically simulating aircraft engine degradation of the aircraft based on the collected environment data and the received operation data using a trained machine learning (ML) model; and outputting the simulated aircraft engine degradation.
10. The system of clause 9, wherein the environment data comprises air quality index (AQI).
11. The system of clause 9 or 10, wherein the operation data comprises at least one of engine exhaust gas temperature, and thrust rating.
12. The system of any one of clauses 9-11, the operation further comprising predicting maintenance needs of the aircraft based on the simulated aircraft engine degradation.
13. The system of clause 12, wherein the predicting maintenance needs comprises estimating a predicted time when the simulated aircraft engine degradation will necessitate maintenance, and the operation further comprising sending an alert when the predicted time satisfies one or more defined criteria.
14. The system of any one of clauses 9-13, the operation further comprising estimating a cost of the aircraft flying between the source airport and the destination airport, based at least in part on historical environment data or the simulated aircraft engine degradation.
15. The system of any one of clauses 9-14, wherein the ML model is trained using historical training data, comprising:
   receiving input training data, wherein the input training data comprises historical environment data and corresponding operation data;
   correlating the input training data with output training data, wherein the output training data comprises known aircraft engine degradations; and
   training the ML model based on the correlation.
16. A computer program product comprising one or more computer-readable storage media collectively containing computer-readable program code that, when executed by operation of one or more computer processors, performs an operation comprising:
   receiving a proposed flight plan for an aircraft;
   collecting environment data representing a set of environmental conditions at a source airport indicated in the proposed flight plan;
   collecting environment data representing a set of environmental conditions at a destination airport indicated in the proposed flight plan;
   receiving operation data related to the aircraft indicated in the proposed flight plan;
   dynamically simulating aircraft engine degradation of the aircraft based on the collected environment data and the received operation data using a trained machine learning (ML) model; and
   outputting the simulated aircraft engine degradation.
17. The computer program product of clause 16, wherein the environment data comprises air quality index (AQI).
18. The computer program product of clause 16 or 17, wherein the operation data comprises at least one of engine exhaust gas temperature, and thrust rating.
19. The computer program product of any one of clauses 16-18, the operation further comprising predicting maintenance needs of the aircraft based on the simulated aircraft engine degradation.
20. The computer program product of any one of clauses 16-19, the operation further comprising estimating an operational cost of the aircraft flying between the source airport and the destination airport, based at least in part on historical environment data or the simulated aircraft engine degradation.

While the foregoing is directed to aspects of the present disclosure, other and further aspects of the disclosure may be devised without departing from the basic scope thereof, and the scope thereof is determined by the claims that follow.

## Claims

1. A method, comprising:
receiving a proposed flight plan for an aircraft;
collecting environment data representing a set of environmental conditions at a source airport indicated in the proposed flight plan;
collecting environment data representing a set of environmental conditions at a destination airport indicated in the proposed flight plan;
receiving operation data related to the aircraft indicated in the proposed flight plan;
dynamically simulating aircraft engine degradation of the aircraft based on the collected environment data and the received operation data using a trained machine learning (ML) model; and
outputting the simulated aircraft engine degradation.

2. The method of claim 1, wherein the environment data comprises air quality index (AQI).

3. The method of claim 1 or 2, wherein the operation data comprises at least one of engine exhaust gas temperature, and thrust rating.

4. The method of any one of the preceding claims, further comprising predicting maintenance needs of the aircraft based on the simulated aircraft engine degradation.

5. The method of claim 4, wherein the predicting maintenance needs comprises estimating a predicted time when the simulated aircraft engine degradation will necessitate maintenance, and the method further comprising sending an alert when the predicted time satisfies one or more defined criteria.

6. The method of any one of the preceding claims, further comprising estimating an operational cost of the aircraft flying between the source airport and the destination airport, based at least in part on historical environment data or the simulated aircraft engine degradation.

7. The method of any one of the preceding claims, wherein the ML model is trained using historical training data, comprising:
receiving input training data, wherein the input training data comprises historical environment data and corresponding operation data;
correlating the input training data with output training data, wherein the output training data comprises known aircraft engine degradations; and
training the ML model based on the correlation.

8. The method of any one of the preceding claims, wherein dynamically simulating aircraft engine degradation of the aircraft further comprises generating dynamic utilization prediction for the aircraft within a range of time based on the proposed flight plan, historical operation data of the aircraft, and historical environment data of the source and destination airports using the trained ML model.

9. A system, comprising:
one or more computer processors; and
a memory containing a program which when executed by the one or more computer processors performs an operation, the operation comprising:
receiving a proposed flight plan for an aircraft;
collecting environment data representing a set of environmental conditions at a source airport indicated in the proposed flight plan;
collecting environment data representing a set of environmental conditions at a destination airport indicated in the proposed flight plan;
receiving operation data related to the aircraft indicated in the proposed flight plan;
dynamically simulating aircraft engine degradation of the aircraft based on the collected environment data and the received operation data using a trained machine learning (ML) model; and
outputting the simulated aircraft engine degradation.

10. The system of claim 9, wherein the environment data comprises air quality index (AQI); or optionally
wherein the operation data comprises at least one of engine exhaust gas temperature, and thrust rating.

11. The system of claim 9 or 10, the operation further comprising predicting maintenance needs of the aircraft based on the simulated aircraft engine degradation.

12. The system of claim 11, wherein the predicting maintenance needs comprises estimating a predicted time when the simulated aircraft engine degradation will necessitate maintenance, and the operation further comprising sending an alert when the predicted time satisfies one or more defined criteria.

13. The system of any one of claims 9-12, the operation further comprising estimating a cost of the aircraft flying between the source airport and the destination airport, based at least in part on historical environment data or the simulated aircraft engine degradation; or optionally
wherein the ML model is trained using historical training data, comprising:
receiving input training data, wherein the input training data comprises historical environment data and corresponding operation data;
correlating the input training data with output training data, wherein the output training data comprises known aircraft engine degradations; and
training the ML model based on the correlation.

14. A computer program product comprising one or more computer-readable storage media collectively containing computer-readable program code that, when executed by operation of one or more computer processors, performs an operation comprising:
receiving a proposed flight plan for an aircraft;
collecting environment data representing a set of environmental conditions at a source airport indicated in the proposed flight plan;
collecting environment data representing a set of environmental conditions at a destination airport indicated in the proposed flight plan;
receiving operation data related to the aircraft indicated in the proposed flight plan;
dynamically simulating aircraft engine degradation of the aircraft based on the collected environment data and the received operation data using a trained machine learning (ML) model; and
outputting the simulated aircraft engine degradation.

15. The computer program product of claim 14, wherein the environment data comprises air quality index (AQI); or optionally
wherein the operation data comprises at least one of engine exhaust gas temperature, and thrust rating; or optionally
the operation further comprising predicting maintenance needs of the aircraft based on the simulated aircraft engine degradation; or optionally
the operation further comprising estimating an operational cost of the aircraft flying between the source airport and the destination airport, based at least in part on historical environment data or the simulated aircraft engine degradation.
